# DEMANDE DE BREVET EUROPEEN

(11) **EP 2 400 452 A1**
(43) Date de publication de la demande: **28.12.2011**
(21) Numéro de dépôt: 11169726.4
(22) Date de dépôt: 14.06.2011
(51) Int. Cl.: G06Q 30/00

(54) **Procédé d'affichage de données, dispositif et produit programme d'ordinateur correspondants**

(30) Priorité: 25.06.2010 FR 1055123
(71) Demandeur: FRANCE TELECOM, 75015 Paris (FR)
(72) Inventeur: Biettron, Laurent, 35000 Rennes (FR)
(74) Mandataire: Le Saux, Gaël

(57) **Abrégé**

L'invention concerne un procédé d'affichage de données sur un écran d'un terminal comprenant une application locale et un navigateur web, caractérisé en ce qu'il comprend au sein dudit terminal, préalablement à une mise en oeuvre d'un service rendu par une application web par l'intermédiaire dudit navigateur web :
- une étape de réception d'une requête de mise en oeuvre de ladite application web ;
- une première étape de transmission, par ladite application web à ladite application locale, par l'intermédiaire de moyens de couplage, d'une requête d'affichage de données par ladite application locale ;
- une étape d'affichage desdites données par ladite application locale ;
- une deuxième étape de transmission, par ladite application locale à ladite application web, par l'intermédiaire desdits moyens de couplage, d'une confirmation d'affichage desdites données.

## Description

### 1 DOMAINE DE L'INVENTION

La présente invention se rapporte au domaine de l'affichage de données sur un écran d'un terminal.

La présente invention se rapporte plus particulièrement à une méthode permettant de réaliser un affichage de données de manière dynamique, lesdites données étant transmises à partir d'un réseau de communication.

À l'heure où quasiment tous les terminaux de communication sont connectés au réseau Internet, les utilisateurs de tels terminaux se sont progressivement habitués à utiliser des services offerts par divers opérateurs et fournisseurs de services. De tels services sont par exemple les services d'accès aux courriers électroniques par l'intermédiaire de navigateurs ou encore des services d'accès à des contenus (bandes annonces par exemple).

Pour financer ces services, les opérateurs ou les fournisseurs de services font appel à de la publicité. Ainsi, en sus des contenus qu'il souhaite visualiser, un utilisateur de ces services se verra également imposer la présence de publicités.

L'affichage d'une publicité est bien souvent intrusive : la publicité se présente sous le forme d'une fenêtre dite « pop-up » qui s'affiche à l'écran lorsque l'utilisateur clique sur un contenu. L'affichage peut également être réalisé à l'intérieur même du contenu, par l'intermédiaire d'un fichier graphique ou d'une animation qui est affichée au coeur même du contenu visualisé par l'utilisateur.

### 2 SOLUTIONS DE L'ART ANTERIEUR

Une des conséquences néfastes de cette surenchère de publicité est que bon nombre d'utilisateurs mettent en oeuvre des dispositifs permettant de bloquer les publicités qui s'affichent de manière intempestive. Ainsi, il existe de nombreux modules appelés « plugins » (extensions, modules complémentaires...) de navigateurs permettant de supprimer l'affichage de publicités des pages affichées dans les navigateurs Web (e.g. modules complémentaires tels que «Ad blocker™ » et « Ad Killer™ » pour le navigateur Firefox™, ou encore la fonctionnalité de type « Bloquer les fenêtres popup » proposée en standard par les navigateurs).

Le problème posé par ces dispositifs de blocage est qu'ils ont poussé les industriels et les fournisseurs de service à mettre en oeuvre des méthodes d'affichage de publicités de plus en plus complexes et intrusives (redirection d'URL, insertion de code Javascript dans les pages HTML, etc). Ces méthodes provoquent en général un effet déceptif vis-à-vis de l'utilisateur et ne l'incitent pas à réutiliser le service « offert ». Il s'ensuit donc un effet contre-productif puisque l'utilisateur ne vient purement et simplement plus utiliser les services en question mais se tourne vers d'autres services qui offrent une expérience plus attractive et plus conviviale.

Ainsi, l'objectif des nouvelles méthodes d'affichage des publicités, qui consistaient à obliger l'utilisateur à visualiser les publicités malgré la présence des dispositifs de blocage des publicités n'a pas eu l'effet escompté et n'a pas apporté satisfaction.

Les anciennes méthodes d'affichage de publicité posent également des problèmes parmi lesquels l'impossibilité de stocker des quantités significatives de données chez l'utilisateur (notamment en raison du fait que les cookies ont une taille limitée), ce qui provoque une certaine uniformisation des contenus publicitaires et donc une adéquation difficile entre le contenu affiché pour l'utilisateur et la publicité correspondante.

### 3 RESUME DE L'INVENTION

L'invention ne présente pas ces inconvénients de l'art antérieur. En effet, l'invention concerne un procédé d'affichage de données sur un écran d'un terminal comprenant une application locale et un navigateur web.

Selon l'invention, un tel procédé comprend au sein dudit terminal, préalablement à une mise en oeuvre d'un service rendu par une application web par l'intermédiaire dudit navigateur web :
- une étape de réception d'une requête de mise en oeuvre de ladite application web ;
- une étape de transmission, dite première étape de transmission, par ladite application web à ladite application locale, par l'intermédiaire de moyens de couplage, d'une requête d'affichage de données par ladite application locale ;
- une étape d'affichage desdites données par ladite application locale ;

Ainsi, l'invention permet de s'assurer que les données à afficher, qui peuvent par exemple être des données publicitaires ou des données relatives à plusieurs autres applications, seront effectivement correctement affichées préalablement à la mise en oeuvre de l'application pour rendre le service désiré à l'utilisateur. En confiant l'affichage des données à l'application locale plutôt qu'au navigateur comme cela est le cas des méthodes de l'art antérieur, l'invention permet d'éviter les dispositifs de blocage et de filtrage de l'art antérieur. La mise en oeuvre de ce procédé selon l'invention est rendue possible par l'utilisation des moyens de couplage qui permettent à l'application locale et à l'application web de communiquer.

Selon une caractéristique particulière, ladite mise en oeuvre dudit service par ladite application web est réalisée lorsque ladite application web a reçu ladite confirmation d'affichage desdites données.

Ainsi, si la transmission de la confirmation d'affichage n'est pas réalisée par l'application locale, la mise en oeuvre de l'application web n'est pas possible. Cette caractéristique permet de s'assurer que des moyens de contournement ne seront pas employés pour éviter que l'application locale n'affiche des données.

Selon un mode de réalisation particulier, ledit procédé comprend, suite à l'étape d'affichage, une deuxième étape de transmission (204), par ladite application locale (APPN) à ladite application web (APPW), par l'intermédiaire desdits moyens de couplage (CPL), d'une confirmation d'affichage desdites données et en ce qu'il comprend en outre au moins une itération des étapes suivantes :
- transmission, par ladite application web à ladite application locale, par l'intermédiaire desdits moyens de couplage, d'une requête d'affichage de données par ladite application locale ;
- transmission, par ladite application locale à ladite application web, par l'intermédiaire desdits moyens de couplage, d'une confirmation d'affichage desdites données.

Ainsi, l'invention permet de vérifier que l'application locale est toujours à même d'afficher les données pour poursuivre la mise en oeuvre du service rendu à l'utilisateur.

Selon un mode de réalisation particulier, ledit procédé comprend en outre, postérieurement à une réception d'une requête d'affichage de données par ladite application locale :
- une étape de transmission une requête d'obtention de données auprès d'un serveur de contenus connecté audit terminal par l'intermédiaire d'un réseau de communication ;
- une étape de réception, par ladite application locale, desdites données.

Selon une caractéristique particulière, ledit procédé comprend en outre, postérieurement à une réception d'une requête d'affichage de données par ladite application locale, une étape de sélection desdites données à afficher au sein d'une base de données enregistrée au sein dudit terminal.

Selon un mode de réalisation particulier, lesdites données à afficher par ladite application locale sont sélectionnées en fonction d'au moins un paramètre lié audit terminal dudit utilisateur.

Selon un mode de réalisation particulier, lesdites données à afficher par ladite application locale sont sélectionnées en fonction d'actions menées par un utilisateur dudit service.

Dans un autre mode de réalisation, l'invention concerne un dispositif d'affichage de données sur un écran d'un terminal comprenant une application locale et un navigateur web. Selon l'invention un tel dispositif comprend :
- des moyens de réception d'une requête de mise en oeuvre de ladite application web ;
- des moyens de transmission, dits premiers moyens de transmission par la suite, par ladite application web à ladite application locale, par l'intermédiaire de moyens de couplage, d'une requête d'affichage de données par ladite application locale ;
- des moyens d'affichage desdites données par ladite application locale ;
- des seconds moyens de transmission, par ladite application locale à ladite application web par l'intermédiaire desdits moyens de couplage, d'une confirmation d'affichage desdites données.

Selon un mode de réalisation particulier, ledit dispositif d'affichage est intégré au sein d'un terminal.

Selon un autre aspect, l'invention concerne également un produit programme d'ordinateur téléchargeable depuis un réseau de communication et/ou stocké sur un support lisible par ordinateur et/ou exécutable par un microprocesseur, et comprenant des instructions de code de programme pour l'exécution du procédé d'affichage tel que décrit précédemment.

### 4 LISTE DES FIGURES

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente une architecture pour la mise en oeuvre de l'invention ;
- la figure 2 est un diagramme de séquence illustrant un premier mode de réalisation du procédé d'affichage de l'invention ;
- la figure 3 est un diagramme de séquence illustrant un deuxième mode de réalisation du procédé d'affichage de l'invention ;
- la figure 4 illustre schématiquement un terminal pour la mise en oeuvre de l'invention ;
- la figure 5 illustre schématiquement un serveur applicatif pour la mise en oeuvre de l'invention.

### 5 DESCRIPTION DETAILLEE DE L'INVENTION

### 5.1 Rappel du principe de l'invention

L'invention propose de mettre en oeuvre une communication entre une application dite web et une application locale, qui s'exécute sur le terminal de l'utilisateur, ladite application web et ladite application locale disposant de moyens spécifiques permettant de communiquer l'une avec l'autre. Par la suite, cette communication entre les deux applications est appelée couplage et c'est ce couplage qui permet aux deux applications de communiquer entre elles. On rappelle qu'une application web est une application qui est exécutée par l'intermédiaire d'un navigateur et qui est également exécutée au moins en partie au sein du serveur web auquel le navigateur est connecté.

Ainsi, il est possible de piloter le fonctionnement de l'application locale par l'intermédiaire de l'application web pour s'assurer que les données à afficher seront perçues, selon la méthode souhaitée, par l'utilisateur.

En effet, l'invention met en oeuvre une technologie de couplage entre l'application web et l'application locale. Des techniques, permettant de mettre en oeuvre ce couplage, seront présentées par la suite dans un mode de réalisation particulier de l'invention.

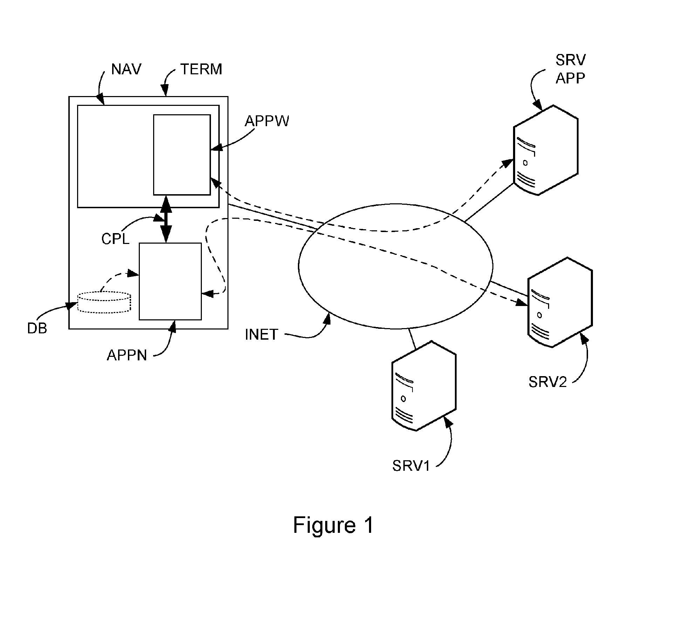

On décrit, en relation avec la figure 1, une architecture pour une mise en ouvre du procédé de l'invention.

Un terminal TERM d'un utilisateur comprend une application locale APPN, qui peut se présenter sous la forme d'un exécutable (« runtime ») et de fichiers de configuration et/ou de fichiers de code. Cette application locale APPN a fait l'objet d'une installation préalable ou concomitante à la mise en oeuvre du procédé, comme cela sera décrit par la suite. Le terminal TERM comprend également un navigateur NAV permettant de visualiser des pages web et de mettre en oeuvre des applications web par l'intermédiaire d'un réseau (INET), comme le réseau Internet qui comprend des serveurs de contenus (SRV 1 et SRV2 dans l'exemple) également appelés « media servers ». Plus particulièrement, dans le cadre de la présente divulgation, le navigateur NAV met en oeuvre une application web APPW qui est au moins partiellement mise en oeuvre par l'intermédiaire d'un serveur SRVAPP. Selon l'invention, l'application web APPW souhaite afficher des données sur l'écran du terminal.

Afin de s'assurer que les données soient perçues par l'utilisateur, l'application web APPW fait appel à l'application locale APPN pour afficher les données. Cet affichage est possible grâce à un couplage CPL entre l'application web APPW et l'application locale APPN. Plus particulièrement, cet affichage est rendu possible grâce à un couplage (CPL) entre le navigateur NAV et l'exécutable (runtime) de l'application locale APPN.

Le couplage CPL est plus spécifiquement réalisé entre le « runtime » « Flash Player » (permettant en partie l'exécution de l'application web APPW) s'exécutant lui-même dans le navigateur NAV en tant que module additionnel (plugin), et le « runtime » de l'application locale APPN s'exécutant localement dans le système du terminal TERM. Selon un mode de réalisation particulier, l'application web APPW peut également être développée en HTML/Javascript « classique » et communiquer avec l'application locale APPN à l'aide d'une application « Flash » dédiée à la mise en oeuvre du couplage CPL.

Ce couplage CPL permet à l'application web APPW de requérir auprès d'un ou de plusieurs serveurs de contenus (SRV1 et/ou SRV2) l'affichage de données par le navigateur NAV et l'affichage de données par l'application locale APPN.

Dans un mode de réalisation complémentaire, les données à afficher par l'application locale APPN sont déjà enregistrées dans le terminal, par exemple au sein d'une base de données DB. Dans ce cas, l'application web APPW se contente de requérir l'affichage de données auprès de l'application locale APPN qui est en charge de la détermination des données à afficher qui peuvent être extraites de la base de données DB enregistrée au sein du terminal ou d'un serveur de contenus accessible par l'intermédiaire du réseau de communication INET.

Dans un autre mode de réalisation complémentaire, les données à afficher par l'application locale sont issues à la fois d'une base de données DB enregistrée au sein du terminal et d'un serveur de contenus accessible par l'intermédiaire du réseau de communication INET.

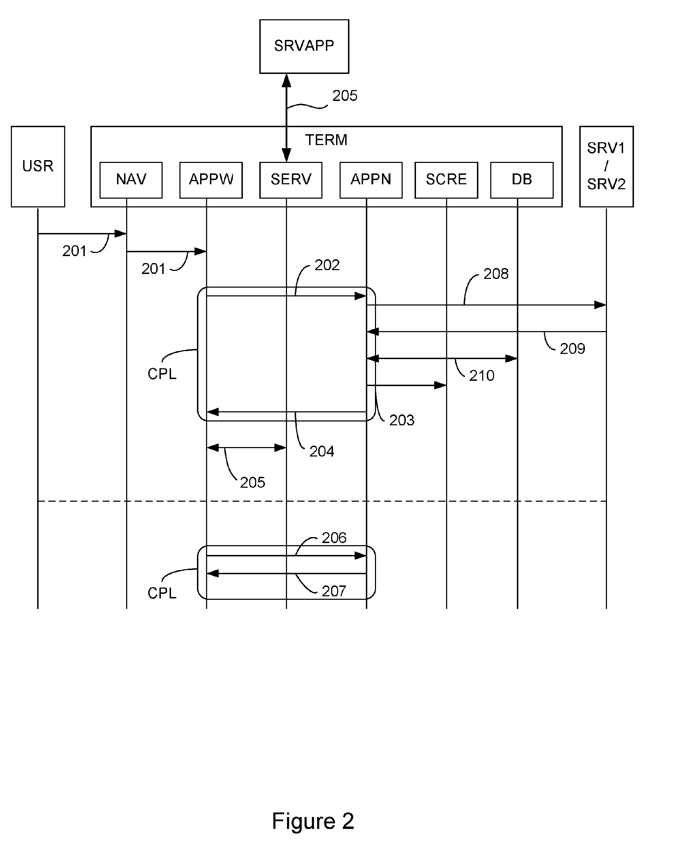

On décrit, en relation avec la figure 2, les principales étapes du procédé d'affichage de données.

Un utilisateur USR du terminal TERM requiert (201) l'utilisation d'un service SERV par l'intermédiaire de l'application APPW fonctionnant dans le navigateur NAV. Préalablement ou conjointement à la mise en oeuvre du service SERV, l'application web APPW transmet (202) à l'application locale APPN une requête d'affichage de données, par l'intermédiaire des moyens de couplage (CPL). L'application locale APPN affiche (203) les données, sous une forme déterminée à l'écran SCRE du terminal, et transmet (204) optionnellement à l'application web APPW une confirmation d'affichage, par l'intermédiaire des moyens de couplage (CPL).

L'application web APPW met en oeuvre (205) le service SERV requis par l'utilisateur USR.

Par la suite, en fonction de l'utilisation du service SERV par l'utilisateur USR, l'application web APPW transmet (206) de manière itérative une requête d'affichage de données et attend de recevoir une confirmation (207) d'affichage de données de la part de l'application locale APPN, avant de poursuivre la mise en oeuvre du service. Cet échange « requête/confirmation » peut soit être le résultat d'une temporisation soit être à l'initiative de l'application web APPW en fonction de l'utilisation du service SERV.

Dans un premier mode de réalisation, pour afficher les données, l'application locale APPN transmet (208) une requête d'obtention de données auprès d'un serveur de contenus SRV2 qui répond (209) à l'application locale APPN en fournissant les données à afficher. Dans un deuxième mode de réalisation, pour afficher les données, l'application locale APPN sélectionne (210), au sein d'une base de données DB enregistrée au sein dudit terminal, les données à afficher.

Selon une caractéristique particulière, lorsque l'application locale APPN n'est plus en état de fonctionnement (par exemple parce que l'utilisateur USR a fermé l'application), l'application web APPW ne reçoit plus de confirmation d'affichage de données de la part de l'application locale APPN. Dans ce cas, soit l'application web APPW cesse de mettre en oeuvre le service SERV requis par l'utilisateur USR, soit l'application web APPW provoque la réouverture de l'application locale APPN afin que cette dernière puisse poursuivre l'affichage de données.

Les données qui sont affichées par l'application locale peuvent être de plusieurs natures : il peut s'agir de données publicitaires, comme cela a déjà été évoqué. Il peut également s'agir de données relatives à d'autres applications. Ainsi, dans un mode de réalisation particulier, non représenté, les données affichées par l'application locale sont des données relatives à des gains ou des pertes engendrés par la mise en oeuvre, au sein du navigateur, d'un service de jeu en ligne. L'application locale est alors utilisée pour comptabiliser les gains et les pertes de l'utilisateur joueur, indépendamment d'un nombre de fenêtres de navigateur ouvertes sur son poste de travail.

Dans un autre mode de réalisation particulier, non représenté, les données affichées par l'application locale sont des données relatives à un temps passé à l'utilisation du service à des fins de facturation ultérieure par exemple.

Selon une caractéristique particulière, les données sélectionnées et affichées tiennent compte des actions menées par l'utilisateur lors de la mise en oeuvre du service telles que : les mots saisis au clavier, les liens sélectionnés par l'utilisateur au sein des pages web affichées par le navigateur, la ou les thématiques abordées dans les pages web consultées, etc.

Le procédé d'affichage de l'invention offre les avantages suivants :
- l'affichage des données (par exemple publicitaires) n'étant pas effectué dans le navigateur, les outils « standards » pour éviter cet affichage (modules complémentaires, bloqueurs de popups...) sont donc inefficaces. Il est alors beaucoup plus difficile pour un utilisateur de modifier (« hacker ») l'application web ou l'application locale pour éviter les publicités.
- le service rendu par l'application web n'est pas perturbé par l'affichage de la publicité. La qualité de l'expérience utilisateur, la simplicité et l'ergonomie du site Web sont maintenues ou améliorées ;
- la mise en oeuvre d'une application locale permet de sauvegarder des données en local, dans le système de fichiers du terminal. La quantité de données pouvant être sauvegardée pour améliorer le ciblage publicitaire n'est pas limitée (sauf bien sûr par la taille disponible sur le dispositif de stockage du terminal client) comme dans le cas des cookies des navigateurs web, et leur suppression par l'utilisateur est moins aisée : il n'y a pas d'outil d'effacement par le navigateur pour effacer les données de l'application locale, contrairement à ce qu'il propose pour effacer facilement les cookies.

Par la suite, on présente notamment une mise en oeuvre du procédé d'affichage de données dans lequel les données à afficher par l'application locale APPN sont des données publicitaires. Il est clair cependant que l'invention ne se limite pas à cette application particulière, mais peut également être mise en oeuvre dans de nombreux autres cas, et par exemple dans le cas d'un affichage de données relatives à des jeux ou des paris en ligne qui nécessitent que l'utilisateur soit informé de ses gains ou de ses pertes indépendamment d'un affichage dans une page web.

### 5.2 Description d'un mode de réalisation

On présente dans ce mode de réalisation, la mise en oeuvre du procédé d'affichage de l'invention pour l'affichage de données publicitaires qui permettent de financer un service offert gratuitement à des utilisateurs.

Dans ce mode de réalisation, une application web, implémentée avec la technologie Flash™ d'Adobe™ (pouvant être développée avec l'outil Flex™ également conçu par Adobe™), s'exécute dans le navigateur d'un terminal d'un utilisateur. Une autre application qui, elle, est locale, est implémentée avec la technologie AIR™ d'Adobe™ (et peut aussi être développée avec Flex™), et s'exécute cette fois nativement au sein du terminal de l'utilisateur, par l'intermédiaire d'un exécutable (« runtime »). AIR™ est une machine virtuelle qui s'exécute sur le système d'exploitation du terminal et non pas à l'intérieur d'un navigateur installé sur celui-ci. C'est cette base technique qui, dans ce mode de réalisation de l'invention, est utilisée pour mettre en oeuvre le couplage entre l'application web et l'application locale, couplage qui permet la communication entre les deux applications, et donc la mise en oeuvre du procédé d'affichage tel que précédemment décrit.

Le choix de la technologie Flash™ d'Adobe™ pour l'application web dans le cadre de ce mode de réalisation s'explique par le fait que le « player » Flash™ a un très fort taux de pénétration (de l'ordre de 99% pour les « mature markets » selon Adobe) dans les navigateurs Windows/Mac/Linux, et est d'ailleurs déjà largement utilisé pour la diffusion de publicité sur le réseau Internet, accédé par des ordinateurs personnels. Le choix de la technologie AIR™ (disponible pour Windows/Mac/Linux) pour l'application locale permet une communication plus simple entre l'application locale et l'application web, ainsi que l'installation « seamless » (sans couture) de l'application locale par l'application web. La machine virtuelle AIR™, nécessaire à l'exécution de l'application locale, est installée automatiquement si besoin lors de l'installation de l'application locale.

Dans le navigateur, via l'application web, l'utilisateur accède à des contenus ou utilise une application dite « riche ». Pour financer ce service qui lui est offert, pendant son utilisation, des publicités sont affichées nativement sur le terminal par l'application locale. Ces publicités peuvent par exemple s'afficher en mode "popup" sur le bureau. La technologie AIR™ permettant d'afficher des contenus tant HTML/Javascript que Flash, les formats possibles sont les mêmes que pour les publicités Web (images, vidéos ou animations Flash).

Selon une caractéristique particulière, il est possible de répartir le service rendu entre l'application web et l'application locale (qui propose le même ensemble de fonctionnalités que l'application web, avec en plus l'accès aux ressources système locales du terminal).

Dans ce mode de réalisation, les technologies Flash™ et AIR™ permettent aux applications web et locale de communiquer entre elles, et permettent à l'application web d'installer et de lancer l'application locale. Grâce à cette caractéristique, l'application web peut déclencher l'affichage de publicités par l'application locale en début et en cours d'utilisation du service. Si, pour éviter l'affichage de publicité, l'utilisateur désactive d'une manière ou d'une autre l'application locale, alors l'application web s'en rend compte et ne fournit plus le service (ou bien l'application web relance l'application locale pour continuer à diffuser de la publicité).

Plus particulièrement, dans ce mode de réalisation de l'invention, la mise en oeuvre du procédé d'affichage de l'invention et plus particulièrement la mise en oeuvre du couplage entre les deux applications est réalisée de la manière suivante :
- Pour ce qui est de l'application web :
   - chargement de la librairie Adobe™ « air.swf », fournissant les fonctionnalités permettant le couplage entre l'application locale et l'application web, et par l'intermédiaire de cette librairie :
   - vérification de l'installation effective sur le terminal de l'exécutable AIR™, ou au moins de sa disponibilité pour ce système ;
   - installation (installApplication()) **de l'application locale** (l'exécutable étant automatiquement installé la première fois si nécessaire) ;
   - lancement de l'application locale (launchApplication()) ;
   - création d'un objet de connexion locale (dans lequel des méthodes de l'application web sont déclarées comme étant exposées à des appels extérieurs) et autorisation de l'utilisation par l'application locale de cette connexion (ce qui permet à l'application locale d'appeler les méthodes exposées par l'application web) ;
   - utilisation d'une connexion locale associée à l'identifiant de l'application locale, et qui est utilisée par l'application web pour appeler des méthodes exposées par l'application locale.
- Pour ce qui est de l'application locale :
   - création d'un objet de connexion locale, dans lequel des méthodes de l'application locale sont déclarées comme étant exposées à des appels extérieurs ;
   - autorisation de l'utilisation par l'application web (via son nom de domaine) de cette connexion préalablement créée ;
   - utilisation d'une connexion locale associée à l'identifiant de l'application web, et qui est utilisée par l'application locale pour appeler des méthodes exposées par l'application web.

On peut également noter les points suivants :
- il n'est pas nécessaire d'utiliser la librairie « air.swf » dans l'application locale, elle est seulement nécessaire à l'application web pour installer/lancer l'application locale ;
- des arguments peuvent être transmis lors des appels des méthodes exposées par l'application locale et l'application web.

### 5.3 Autres caractéristiques optionnelles et avantages

Dans au moins un mode de réalisation de l'invention, non représenté, l'affichage des données par ladite application locale du terminal est paramétré. Ce paramétrage est fonction de plusieurs éléments qui sont liés d'une part au service qui est mis en oeuvre par l'application web et d'autre part au terminal sur lequel est installée l'application locale.

En effet, il a été expliqué qu'un des problèmes que l'invention cherche à résoudre est l'affichage correct des données (par exemple des publicités) sans que cet affichage vienne perturber la mise en oeuvre du service. Pour que cet affichage soit réalisé dans les meilleures conditions, les inventeurs ont eu l'idée de prévoir un affichage qui tient compte :
- de la taille de l'écran du terminal : cette taille permet de décider de l'espace accordé à l'affichage des données par l'application locale au regard de l'espace disponible sur l'écran du terminal : la taille de la fenêtre utilisée par l'application locale pour afficher les données peut être proportionnelle à la taille de l'écran ;
- du débit de transfert de données entre le terminal et le réseau de communication, afin d'adapter les données à afficher par l'application locale au débit disponible et ne pas réduire indûment le débit nécessaire à la mise en oeuvre du service par l'application web : si le débit est trop faible, les données peuvent prendre la forme de données textuelles simples, nécessitant peu de débit pour leur transmission ;
- des actions réalisées par l'utilisateur en cours de mise en oeuvre du service rendu par l'application web : si l'utilisateur est par exemple en cours de recherche d'un article particulier à acheter, les données affichées par l'application locale peuvent se référer à cette recherche.

Pour ce faire, l'application web dispose de moyens de prise en compte des capacités du terminal de communication. Ces moyens peuvent par exemple se baser sur certaines des informations d'en-tête qui composent les requêtes d'obtention de données qui sont transmises depuis le navigateur qui est installé sur le terminal et sur le traitement de ces données d'en-tête au niveau du serveur qui reçoit la requête de mise en oeuvre de service. Le serveur peut alors décoder l'en-tête de la requête et analyser les données que renferme cet en-tête pour :
- obtenir des données relatives au terminal (type d'écran, taille, processeur, mémoire, etc.),
- obtenir des données fournies par l'application locale, par l'intermédiaire du couplage avec l'application web, pour analyser les actions préalablement réalisées par l'utilisateur,
- vérifier le débit de transmission de la requête.

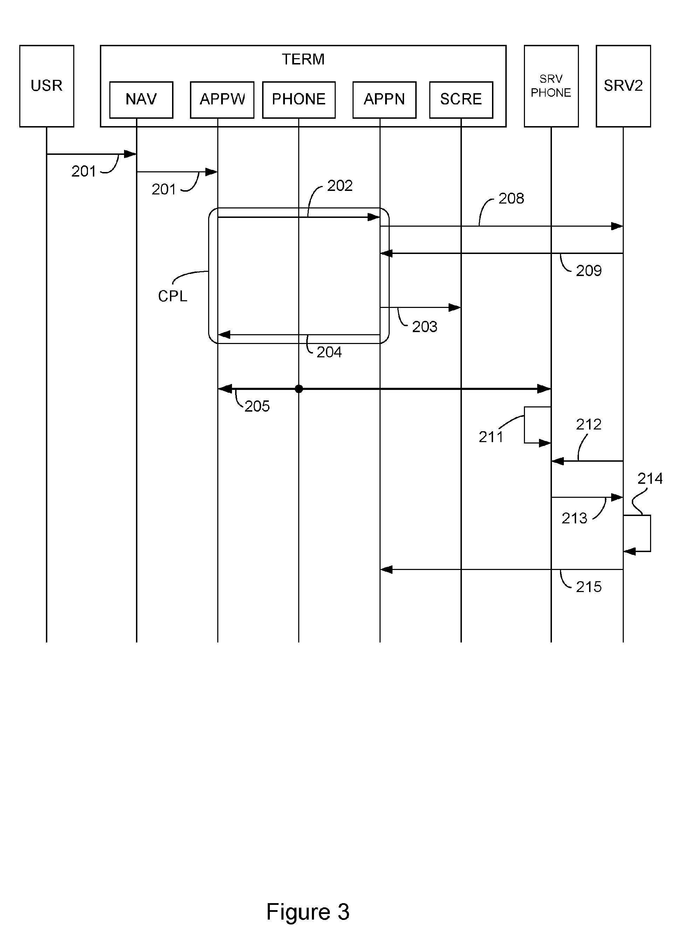

On présente, en relation avec la figure 3, une mise en oeuvre du procédé d'affichage dans laquelle l'application web APPW est un service de téléphonie, mis en oeuvre sur un serveur de média dit « de téléphonie » SRVPHONE. Pour plus de facilité, les références des deux précédentes figures ont été conservées.

Dans ce mode de réalisation de l'invention, en sus du couplage réalisé entre l'application web APPW et l'application locale APPN, un couplage spécifique, adapté à la problématique de la publicité dont le contenu doit être lié à l'application téléphonique, est mis en oeuvre. Ce couplage spécifique permet au serveur de téléphonie SERVPHONE de transmettre des données spécifiques au serveur de contenus SERV2 afin que celui-ci puisse adapter le contenu de l'information transmise à l'application locale APPN.

Un utilisateur USR du terminal TERM requiert (201) l'utilisation du service de téléphonie PHONE par l'intermédiaire de l'application APPW fonctionnant dans le navigateur NAV pour appeler un autre utilisateur (non représenté). L'autre utilisateur peut utiliser tout type de terminal téléphonique pouvant être connecté (plus ou moins directement) au serveur SRVPHONE.

Préalablement ou conjointement au lancement du service PHONE, l'application web APPW transmet (202) à l'application locale APPN une requête d'affichage de données. L'application locale APPN affiche (203) les données, sous une forme déterminée à l'écran SCRE du terminal, et transmet (204) à l'application web APPW une confirmation d'affichage.

L'application web APPW met en oeuvre (205) le service de téléphonie PHONE requis par l'utilisateur USR par l'intermédiaire du serveur SRVPHONE.

Dans ce premier mode de réalisation, pour afficher les données, l'application locale APPN transmet (208) une requête d'obtention de données auprès d'un serveur de contenus SRV2 qui répond (209) à l'application locale APPN en fournissant les données à afficher.

Dans le même temps, le serveur de téléphonie analyse (211) les contenus échangés entre l'utilisateur USR et son correspondant. Pour ce faire, le serveur de téléphonie SRVPHONE comprend par exemple des moyens d'analyse sous la forme de modules de reconnaissance de la parole. Le serveur de téléphonie SRVPHONE dispose ainsi d'un ensemble de termes utilisés par les interlocuteurs de la conversation téléphonique. A intervalles réguliers, le serveur de contenus SRV2 interroge (212) le serveur de téléphonie SRVPHONE pour obtenir une liste de termes utilisés dans la conversation téléphonique entre l'utilisateur USR et son correspondant. Le serveur de téléphonie SRVPHONE transmet (213) au serveur de contenus SRV2 une liste de termes reconnus lors de la conversation. Le serveur de contenus SRV2 analyse (214) ces termes et transmet (215), à l'application locale APPN, des contenus à afficher qui sont relatifs aux termes reconnus.

Ainsi, les données qui sont affichées par l'application locale APPN correspondent à l'objet de la conversation entre l'utilisateur et son interlocuteur. Il est donc possible, dans ce mode de réalisation, de circonstancier les données qui sont affichées.

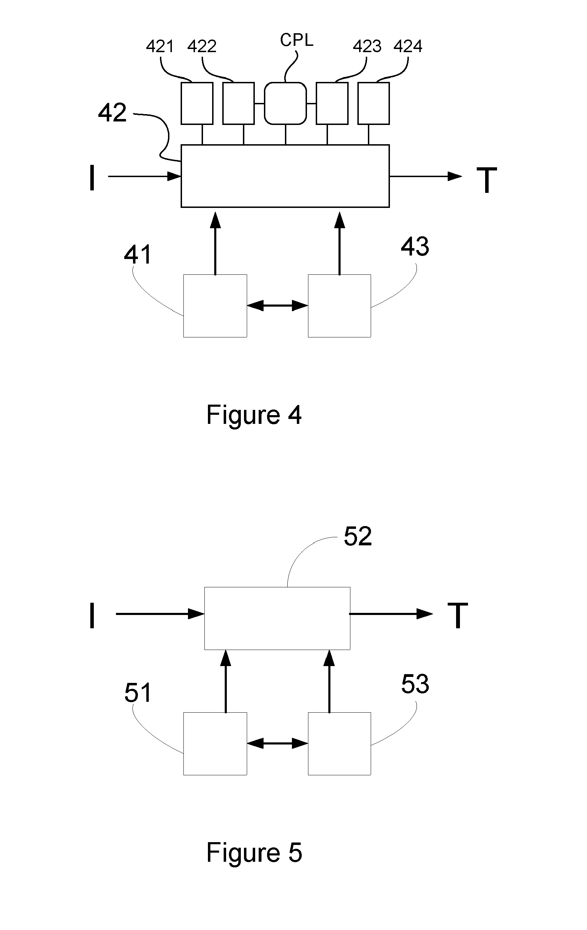

On présente, en relation avec la figure 4, un terminal de communication selon l'invention.

Un tel terminal comprend une mémoire 41 constituée d'une mémoire tampon, une unité de traitement 42, équipée par exemple d'un microprocesseur et pilotée par le programme d'ordinateur 43, mettant en oeuvre le procédé d'affichage de données selon l'invention.

A l'initialisation, les instructions de code du programme d'ordinateur 43 sont par exemple chargées dans une mémoire RAM avant d'être exécutées par le processeur de l'unité de traitement 42. L'unité de traitement 42 reçoit en entrée au moins une information I, telle que des requêtes de mise en oeuvre d'un service en provenance d'un utilisateur. Le microprocesseur de l'unité de traitement 42 met en oeuvre les étapes du procédé d'affichage décrit précédemment, selon les instructions du programme d'ordinateur 43, pour délivrer une information traitée T, telle que l'indication de l'affichage des données à l'application web. Pour cela, le terminal comprend, outre la mémoire tampon 41, des moyens de réception (421) d'une requête de mise en oeuvre de ladite application web, des moyens de transmission (422), par ladite application web à ladite application locale, par l'intermédiaire de moyens de couplage (CPL), d'une requête d'affichage de données par ladite application locale, des moyens d'affichage (423) desdites données par ladite application locale, des moyens de transmission (424), par ladite application locale à ladite application web par l'intermédiaire desdits moyens de couplage, d'une confirmation d'affichage desdites données. Ces moyens sont pilotés par le microprocesseur de l'unité de traitement 42. Ces moyens peuvent, dans un premier mode de réalisation, prendre la forme de modules logiciels (tels que décrits) qui sont installés au sein d'une mémoire temporaire ou permanente du terminal. Dans un deuxième mode de réalisation, ces moyens peuvent prendre la forme d'un ou plusieurs circuits intégrés spécifiquement conçus.

On présente, en relation avec la figure 5, un serveur de contenus selon l'invention. Un tel serveur comprend une mémoire 51 constituée d'une mémoire tampon, une unité de traitement 52, équipée par exemple d'un microprocesseur, et pilotée par un programme d'ordinateur 53, mettant en oeuvre le procédé de transmission de données à afficher.

A l'initialisation, les instructions de code du programme d'ordinateur 53 sont par exemple chargées dans une mémoire RAM avant d'être exécutées par le processeur de l'unité de traitement 52. L'unité de traitement 52 reçoit en entrée au moins une information I, telle qu'une requête d'obtention de données à afficher. Le microprocesseur de l'unité de traitement 52 met en oeuvre les étapes du procédé décrit précédemment, selon les instructions du programme d'ordinateur 53, pour délivrer une information traitée T, qui correspondent aux données à transmettre au terminal pour qu'elles soient affichées. Pour cela, le dispositif comprend, outre la mémoire tampon 51, des moyens de réception de requête d'obtention de données en provenance d'un terminal, par l'intermédiaire d'un réseau de communication auquel le terminal et le serveur sont connectés, et des moyens de transmission des données sélectionnées, éventuellement en fonction d'action effectuées par l'utilisateur du terminal afin d'adapter les données à afficher à ces actions. Ces moyens sont pilotés par le microprocesseur de l'unité de traitement 52.

## Revendications

1. Procédé d'affichage de données sur un écran d'un terminal comprenant une application locale (APPN) et un navigateur web (NAV), **caractérisé en ce qu'**il comprend au sein dudit terminal, préalablement à une mise en oeuvre d'un service (SERV) rendu par une application web (APPW) par l'intermédiaire dudit navigateur web (NAV) :
- une étape de réception (201) d'une requête de mise en oeuvre de ladite application web (APPW) ;
- une étape de transmission (202), dite première étape de transmission, par ladite application web (APPW) à ladite application locale (APPN), par l'intermédiaire de moyens de couplage (CPL), d'une requête d'affichage de données par ladite application locale ;
- une étape d'affichage (203) desdites données par ladite application locale (APPN).

2. Procédé d'affichage de données selon la revendication 1, **caractérisé en ce que** ladite mise en oeuvre (205) dudit service (SERV) par ladite application web (APPW) est réalisée lorsque ladite application web (APPW) a reçu ladite confirmation d'affichage desdites données.

3. Procédé d'affichage selon la revendication 1, **caractérisé en ce qu'**il comprend une deuxième étape de transmission (204), par ladite application locale (APPN) à ladite application web (APPW), par l'intermédiaire desdits moyens de couplage (CPL), d'une confirmation d'affichage desdites données et **en ce qu'**il comprend en outre au moins une itération des étapes suivantes :
― transmission (206), par ladite application web (APPW) à ladite application locale (APPN), par l'intermédiaire desdits moyens de couplage (CPL), d'une requête d'affichage de données par ladite application locale ;
― transmission (207), par ladite application locale (APPN) à ladite application web (APPW), par l'intermédiaire desdits moyens de couplage (CPL), d'une confirmation d'affichage desdites données.

4. Procédé selon la revendication 1, **caractérisé en ce qu'**il comprend en outre, postérieurement à une réception d'une requête d'affichage de données par ladite application locale (APPN) :
- une étape de transmission (208) une requête d'obtention de données auprès d'un serveur de contenus connecté audit terminal par l'intermédiaire d'un réseau de communication ;
- une étape de réception (209), par ladite application locale, desdites données.

5. Procédé selon la revendication 1, **caractérisé en ce qu'**il comprend en outre, postérieurement à une réception d'une requête d'affichage de données par ladite application locale (APPN), une étape de sélection (210) desdites données à afficher au sein d'une base de données enregistrée au sein dudit terminal.

6. Procédé selon la revendication 1, **caractérisé en ce que** lesdites données à afficher par ladite application locale (APPN) sont sélectionnées en fonction d'au moins un paramètre lié audit terminal dudit utilisateur.

7. Procédé selon la revendication 1, **caractérisé en ce que** lesdites données à afficher par ladite application locale (APPN) sont sélectionnées en fonction d'actions menées par un utilisateur dudit service.

8. Dispositif d'affichage de données sur un écran d'un terminal comprenant une application locale et un navigateur web, **caractérisé en ce qu'**il comprend :
- des moyens de réception d'une requête de mise en oeuvre d'une application web par l'intermédiaire dudit navigateur web ;
- des moyens de transmission, par ladite application web à ladite application locale, par l'intermédiaire de moyens de couplage, d'une requête d'affichage de données par ladite application locale ;
- des moyens d'affichage desdites données par ladite application locale.

9. Dispositif selon la revendication 8, **caractérisé en ce qu'**il est intégré au sein d'un terminal.

10. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé d'affichage selon l'une au moins des revendications 1 à 7, lorsqu'il est exécuté sur un ordinateur.
